Europäisches Patentamt

European Patent Office

Office européen des brevets

(11) Publication number: **0 213 828**
**B1**

(12) **EUROPEAN PATENT SPECIFICATION**

(45) Date of publication of patent specification: **18.10.89**

(51) Int. Cl.⁴: **H 01 M 10/39, H 01 M 4/64**

(21) Application number: **86306180.0**

(22) Date of filing: **11.08.86**

(54) Sodium-sulphur storage battery.

(30) Priority: **14.08.85 JP 179088/85**

(43) Date of publication of application:
**11.03.87 Bulletin 87/11**

(45) Publication of the grant of the patent:
**18.10.89 Bulletin 89/42**

(84) Designated Contracting States:
**DE FR GB**

(56) References cited:
**EP-A-0 020 061**
**DE-A-2 633 345**
**GB-A-1 595 767**
**US-A-4 070 527**
**US-A-4 117 208**
**US-A-4 360 575**

**PATENTS ABSTRACTS OF JAPAN, vol. 9, no.
244 (E-346)1967r, 30th September 1985; JP-A-
60 95 864 (HITACHI SEISAKUSHO K.K.) 29-05-
1985**

(73) Proprietor: **YUASA BATTERY CO., LTD.**
**6-6, Johsai-cho**
**Takatsuki-shi, Osaka (JP)**

(72) Inventor: **Kagawa, Hiroshi**
**YUASA BATTERY CO. LIMITED 6-6, Jyousai-cho**
**Takatsuki-shi Osaka (JP)**

(74) Representative: **Barker, Rosemary Anne et al**
**c/o O'BRIENS 94 Market Street**
**Manchester M1 1PJ (GB)**

(56) References cited:
**PATENTS ABSTRACTS OF JAPAN, vol. 9, no.
147 (E-323)1870r, 21st June 1985; & JP-A-60 28
175 (YUASA DENCHI K.K.) 13-02-1985**

Courier Press, Leamington Spa, England.

**Description**

This invention relates to a sodium-sulphur storage battery, and particularly to a novel structure of positive electroconductive material for use in same.

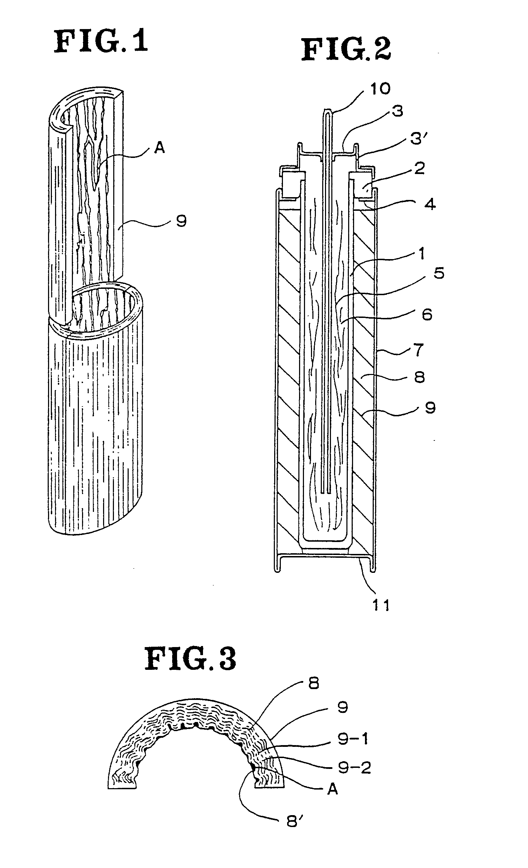

Figure 2 is a schematic longitudinally sectional view of a known sodium-sulphur storage battery in which an alpha-alumina ring 2 is joined by means of solder glass to an upper end of a solid electrolyte tube 1 made from material, such as beta-alumina or beta-dash-alumina, which is permeable to sodium ions. A negative auxiliary cover 3' and a positive cover 4 are thermocompressively joined to the upper and lower surfaces of the alpha-alumina ring 2, respectively.

A negative chamber inside the solid electrolyte tube 1 is filled with metal fibre 5 such as stainless steel, iron, Nichrome, aluminum or the like. A negative current terminal collector 10, which is made from copper coated by stainless steel and which is welded to the negative cover 3, is inserted into the central part of the aforesaid negative chamber. Moreover, the said chamber is filled with sodium, which functions as negative reactant 6, by vacuum impregnation through the top of the negative current terminal collector 10. The top end of the terminal collector 10 is sealingly closed by vacuum welding to maintain the vacuum therein.

A positive chamber is formed between the solid electrolyte tube 1 and a battery housing 7 which is welded to the positive cover 4. The housing 7 is made from metal having sufficient resistance to chemical and electro-chemical attack by molten sulphur and sodium polysulfide and functions as a positive current collector. Positive electroconductive material, namely graphite felt 9, into which positive reactant 8, namely sulphur, is impregnated, is disposed in the positive chamber. A bottom cover 11 is welded to the battery housing 7 to seal the chamber with a vacuum therein.

When the sodium-sulphur storage battery having the aforesaid structure is discharged at a battery operation temperature of about 350°C, the negative reactant 6, i.e. the sodium, in the solid electrolyte tube 1 is ionized and moves through the solid electrolyte tube 1 into the positive electroconductive material. It reacts with the positive reactant 8, i.e. the sulphur, in the positive electro-conductive material to form resultant discharge substance $Na_2 S_x$. When said resultant substance becomes $Na_2 S_{2.7-3.0}$ the discharge finishes. During subsequent recharging, the resultant discharge substance $Na_2 S_x$ in the graphite felt 9 changes and returns via $Na_2 S_5$ to sulphur, and the sodium ion returns through the solid electrolyte tube 1 to the negative chamber.

The sulphur is deposited sufficiently and substantially uniformly in the graphite felt 9 during the recharging operation subsequent to the discharging operation. This deposited sulphur does not diffuse to any great extent. At the outer surface of the solid electrolyte tube 1 it tends to stick to form an electrical resistance layer, which prevents or restricts the movement of the sodium ion to the negative chamber. Thus, the charging voltage increases to a predetermined or intended maximum value of about 3.0V before sufficient charging is performed, which means that it becomes harder to obtain intended or regulated battery capacity as charge-discharge cycles increase.

To overcome said problem, German Patent Specification 2633345 (and corresponding GB 1526677) discloses a sodium sulphur storage battery comprising a battery housing which functions as a positive current terminal collector, a solid electrolyte tube which is permeable to sodium ion and is disposed in the battery housing, and graphite felt, into which sulphur is impregnated, disposed in a positive chamber between the solid electrolyte tube and the battery housing, the felt being in the form of a hollow body provided with recesses in its inner surface adjacent the electrolyte tube.

In this respect, it was reasoned that since sulphur wetted graphite much more readily than $Na_2 S_5$, the sulphur tended to migrate to the uninterrupted graphite region away from the electrolyte tube, while $Na_2 S_5$ tended to collect in the region adjacent the tube where annular recesses had been cut.

Alternative proposals with same effect were to have a layer of graphite of higher electrical resistance adjacent the electrolyte tube, or a layer of graphite of larger pore size adjacent the electrolyte tube.

It is an object of the present invention to provide an improved sodium-sulphur storage battery for which the manufacturing cost is reduced by using a construction of hollow graphite felt body which is readily produced.

This object is achieved in accordance with the invention by provision of a sodium-sulphur storage battery of the type just referred to but characterised in that the recesses extend substantially parallel to the longitudinal axis of the felt body and alternate with ridges, these recesses and ridges being constituted by successive concave and convex regions which have been formed by folding of the inner surface of the felt body upon compression moulding of said body.

Advantageously, the hollow graphite felt body into which sulphur is impregnated, is also divided into at least four parts along a longitudinal plane and a crosswire plane.

The invention will be described further, by way of example, with reference to the accompanying drawings, in which:

Figure 1 is a schematic perspective view of a hollow graphite felt body used in a preferred embodiment of a sodium-sulphur storage battery according to the invention;

Figure 2 is a schematic sectional view of a typical sodium-sulphur storage battery, as already described; and

Figure 3 is a schematic cross sectional view of the hollow graphite felt body of Figure 1.

Referring to Figure 1, a preferred form of hollow graphite felt body 9, as used in a sodium-sulphur storage battery in accordance with the invention, has an overall cylindrical shape and is divided into four

2

parts along a substantially central crosswise plane. The body 9 is formed by compression moulding, and has an inner surface which is rugged or ridged (as at A) as longitudinally extending concave and convex regions are formed therein by folding.

In this particular embodiment of the invention, the body 9 is formed by an outer layer of graphite felt which is 10mm in thickness, 110mm in width and 190mm in length laid over an inner layer of graphite felt which is 5mm in thickness, 110mm in width and 190mm in length, these layers being compressively moulded after 185gm of sulphur has been impregnated into them. Since two layers of the graphite felt of the same width are laid over each other and compressively moulded to form the hollow body 9, the inner surface is automatically ridged or made rugged (as at A) by the compression moulding process, and the body 9 has a resulting cross section as shown in Figure 3. In this respect, weakly compressed portions 9-1 and strongly compressed portions 9-2, alternately located in a circumferential direction, are formed in the graphite felt.

With this structure, the sulphur deposited during the charging operation, mostly diffuses into the outer portion of the graphite felt body 9 as indicated at 8 in Figure 3, and only starts to be deposited in the concave regions of the rugged inner surface, as indicated at 8' in Figure 3, after the charge progresses to some extent, so that the surface of the solid-electrolyte tube 1 (Figure 1) is covered only by a small amount of the sulphur.

An investigation has been carried out as to the relationship between the number of charge-discharge cycles, the battery capacity and the maximum voltage during the discharging operation in the battery of the invention, having the above-described structure of the graphite felt body 9, and in a known battery of a type described in Japanese Specification No. 56-35374 wherein needle punching has been performed perpendicular or crosswise to the direction of graphite fibres but the inner surface of the graphite body 9 does not have said ridges and recesses produced by compression moulding as are now proposed. The results are as shown in the following table 1.

TABLE 1

| Sorts of Battery | | | |
|---|---|---|---|
| Charge-Discharge Cycles | Parameter Tested | Battery of Invention 369Ah | Known Battery 370Ah |
| 1 cycle | Battery Capacity | 369Ah | 370Ah |
| | Max. Voltage | 1.901V | 1.901V |
| 50 cycles | Battery Capacity | 361Ah | 340Ah |
| | Max. Voltage | 1.895V | 1.854V |
| 100 cycles | Battery Capacity | 363Ah | 300Ah |
| | Max. Voltage | 1.897V | 1.798V |

It is apparent from table 1 that both the battery of the invention and the known battery have similar battery capacities and maximum voltages after a single charge-discharge cycle. However, with the known battery, both the battery capacity and the maximum voltage decrease as the number of charge-discharge cycles increases. In contrast, with the battery of the invention, the capacity and maximum voltage do not change substantially because only a small amount of the sulphur is deposited on the surface of the solid electrolyte tube during the charging operation. Moreover, with the battery of the invention, the charging capacity does not change substantially with respect to the battery capacity even after a considerable increase in the number of charge-discharge cycles.

Although the foregoing invention has been described in some detail by way of illustration and example for purposes of clarity of understanding, it will be obvious that certain changes and modifications may be introduced within the scope of the appended claims. In this respect, in modifications, the graphite felt body can be formed with a rugged or rigid inner surface by compression moulding of a single layer of graphite felt, the original inner surface of which is greater in width than the outer circumference of the solid electrolyte tube or by the compression moulding of a single layer of graphite felt the original outer surface of which is greater in width than the inner circumference of the battery housing.

## Claims

1. A sodium-sulphur storage battery comprising a battery housing (7) which functions as a positive current terminal collector, a solid electrolyte tube (1) which is permeable to sodium ion and is disposed in the battery housing (7), and graphite felt (9), into which sulphur (8) is impregnated, disposed in a positive chamber between the solid electrolyte tube (1) and the battery housing (7), the felt (9) being in the form of a hollow body provided with recesses in its inner surface adjacent the electrolyte tube (1), characterised in that the recesses extend substantially parallel to the longitudinal axis of the felt body (9) and alternate with ridges, these recesses and ridges being constituted by successive concave and convex regions which have been formed by folding of the inner surface of the felt body (9) upon compression moulding of said body.

2. A sodium-sulphur storage battery according to claim 1 wherein the hollow graphite felt body (9) is divided into at least four parts along a longitudinal plane and a crosswise plane.

3. A sodium-sulphur storage battery according to claim 1 or 2 wherein the hollow graphite felt body (9) is formed by compression moulding of a single layer of graphite felt, the inner surface of which was greater in width than the outer circumference of the solid electrolyte tube.

4. A sodium-sulphur storage battery according to claim 1 or 2 wherein the hollow graphite felt body (9) is formed by compression moulding of a single layer of graphite felt, the outer surface of which was greater in width than the inner circumference of the battery housing.

5. A sodium-sulphur storage battery according to claim 1 or 2 wherein the hollow graphite felt body (9) is formed by compression moulding of two layers of graphite felt, namely an inner layer and an outer layer which is laid thereover and which has an outer surface substantially equal in width to the inner surface of the inner layer.

## Patentansprüche

1. Natrium-Schwefel-Speicherzelle, die ein Speichergehäuse (7), das als positiver Stromanschluß dient, ein Festelektrolytrohr (1), das für Schwefelionen durchlässig und im Speichergehäuse (7) angeordnet ist, einen Graphitfilz (9), der mit Schwefel imprägniert und in einer Anodenkammer zwischen dem Festelektrolytrohr (1) und dem Speichergehäuse (7) angeordnet ist, aufweist, und bei welcher der Filz (9) als mit Ausnehmungen auf seiner dem Elektrolytrohr benachbarten Innenseite versehener Hohlkörper ausgebildet ist, dadurch gekennzeichnet, daß die Ausnehmungen sich im wesentlichen parallel zur Längsachse des Filzkörpers (9) erstrecken und mit Rippen abwechseln, und daß die Ausnehmungen und Rippen durch aufeinanderfolgende konkave und kovexe Bereiche gebildet sind, die durch ein Falten der Innenseite des Filzkörpers (9) beim Preßformen dieses Körpers entstehen.

2. Natrium-Schwefel-Speicherzelle nach Anspruch 1, dadurch gekennzeichnet, daß der hohle Graphitfilzkörper (9) in mindestens vier Teile entlang einer Längsebene und einer Querebene geteilt ist.

3. Natrium-Schwefel-Speicherzelle nach Anspruch 1 oder 2, dadurch gekennzeichnet, daß der hohle Graphitfilzkörper (9) durch Preßformen einer einzigen Lage von Graphitfilz gefertigt ist, deren Innenseite eine größere Breite als der Außenumfang des Festelektrolytrohres hatte.

4. Natrium-Schwefel-Speicherzelle nach Anspruch 1 oder 2, dadurch gekennzeichnet, daß der hohle Graphitfilzkörper (9) durch Preßformen einer einzigen Graphitfilzlage gebildet ist, deren Außenseite eine größere Breite als der Innenumfang des Speichergehäuses hatte.

5. Natrium-Schwefel-Speicherzelle nach Anspruch 1 oder 2, dadurch gekennzeichnet, daß der hohle Graphitfilzkörper (9) durch Preßformen von zwei Graphitfilzlagen gebildet ist, nämlich einer inneren Lage und einer darüber gelegten äußeren Lage, deren Außenseite im wesentlichen die gleiche Breite wie die Innenseite der inneren Lage hat.

## Revendications

1. Batterie sodium-soufre, comportant une enveloppe de batterie (7) qui fonctionne comme une borne collectrice de courant positive, un tube d'électrolyte solide (1) qui est perméable aux ions sodium et est disposé dans l'enveloppe de batterie (7), et du feutre graphite (9), dans lequel du soufre (8) est introduit par imprégnation, disposé dans une chambre positive entre le tube d'électrolyte solide (1) et l'enveloppe de batterie (7), le feutre (9) étant sous forme d'un corps creux muni de logements dans sa surface intérieure adjacente du tube d'électrolyte (1), caractérisée en ce que les logements s'étendent de façon sensiblement parallèle à l'axe longitudinal du corps en feutre (9) et alternent avec des crêtes, ces logements et ces crêtes étant constitués de zones successives concaves et convexes qui ont été formées par pliage de la surface intérieure du corps de feutre (9) lors du moulage par compression dudit corps.

2. Batterie du type sodium-soufre selon la revendication 1, dans laquelle le corps creux en feutre de graphite (9) est divisé en au moins quatre parties suivant un plan longitudinal et un plan transversal.

3. Batterie du type sodium-soufre selon la revendication 1 ou 2, dans laquelle le corps creux en feutre de graphite (9) est formé par moulage par compression d'une couche de feutre de graphite dont la surface intérieure a une largeur supérieure à l'étendue périphérique extérieure du tube d'électrolyte solide.

4. Batterie du type sodium-soufre selon la revendication 1 ou 2, dans laquelle le corps creux en feutre de graphite (9) est formé par moulage par compression d'une seule couche de feutre de graphite dont la surface extérieure a une largeur supérieure à l'étendue périphérique intérieure de l'enveloppe de batterie.

5. Batterie du type sodium-soufre selon la revendication 1 ou 2, dans laquelle le corps creux en feutre de graphite (9) est formé par moulage par compression de deux couches de feutre de graphite, à savoir une couche intérieure et une couche extérieure déposée sur la première et qui présente une surface extérieure de largeur sensiblement égale à la largeur de la surface intérieure de la couche intérieure.

# FIG.1

A

9

# FIG.2

10

3

3'

2

4

1

5

6

7

8

9

11

# FIG.3

8

9

9-1

9-2

A

8'